# EUROPÄISCHE PATENTSCHRIFT

(11) **EP 4 115 109 B1**
(45) Veröffentlichungstag und Bekanntmachung des Hinweises auf die Patenterteilung: **15.01.2025**
(21) Anmeldenummer: 21708192.6
(22) Anmeldetag: 24.02.2021
(51) Int. Cl.: B32B 1/08, F16L 55/134, F16L 55/163, F16L 55/1645, B32B 25/00, B32B 25/10, B32B 5/02

(54) **VORRICHTUNG UND VERFAHREN ZUM ABDICHTEN BZW. SANIEREN EINER UNDICHTEN UND/ODER BESCHÄDIGTEN STELLE AN EINER ROHRINNENWAND EINES ROHRS**
DEVICE AND METHOD FOR SEALING OR REPAIRING A LEAKING AND/OR DAMAGED AREA ON THE INNER WALL OF A PIPE
DISPOSITIF ET PROCEDE D'ETANCHEIFICATION OU DE REPARATION D'UNE ZONE FUYANTE ET/OU ENDOMMAGEE SUR LA PAROI INTERNE D'UN TUBE

(30) Priorität: 06.03.2020 DE 102020106094
(43) Veröffentlichungstag der Anmeldung: 11.01.2023
(73) Patentinhaber: Vetter GmbH, 53909 Zülpich (DE)
(72) Erfinder: RINGS, Christopher, 52349 Düren (DE)
(74) Vertreter: Patentanwälte Bauer Vorberg Kayser
(86) Internationale Anmeldenummer: PCT/EP2021/054567
(87) Internationale Veröffentlichungsnummer: WO 2021/175674

(56) Entgegenhaltungen:
- WO-A1-2004/023088
- DE-A1- 102017 127 458
- DE-U1- 29 807 747
- US-A1- 2016 186 911

## Beschreibung

Die vorliegende Erfindung betrifft eine Vorrichtung zum Abdichten bzw. Sanieren einer undichten und/oder beschädigten Stelle an einer Rohrinnenwand eines Rohrs, insbesondere eines Abwasserrohrs, umfassend einen volumen-expandierbaren Balgkörper, der dazu ausgebildet ist, sich bei einer Positionierung des Balgkörpers im Bereich der undichten und/oder beschädigten Stelle im Innenraum des Rohrs, unter Infiltrieren eines Fluids, insbesondere eines gasförmigen Fluids, in einen Balgkörper-Innenraum unter Zunahme seines Volumens auszudehnen, wobei auf einer äußeren Oberfläche des Balgkörpers ein Trägerabschnitt ausgebildet ist, auf welchem eine geharzte Dichtungsmatte anordenbar ist, die in einem ausgedehnten Zustand des Balgkörpers im Bereich der undichten und/oder beschädigten Stelle durch Andrücken gegen die Rohrinnenwand des Rohrs an dieser befestigbar und aushärtbar ist.

Dabei ist die Vorrichtung nicht auf eine bestimmte Art von Rohren oder ein bestimmtes Anwendungsgebiet beschränkt. Unter einem Rohr ist ein Hohlkörper zu verstehen, durch welchen ein gasförmiges, flüssiges oder zähflüssiges Fluid oder ein Feststoff-Flüssigkeit-Gemisch (z.B. Abwasser) entlang einer vorgegebenen Wegstrecke transportiert werden kann. Rohre werden sowohl in Privathaushalten als auch im Bereich der öffentlichen Versorgung eingesetzt (beispielsweise zur Trinkwasserversorgung oder Abwasserentsorgung). Auch in industriellen Anwendungen kommen Rohre regelmäßig zum Einsatz. Ferner ist die vorliegende Erfindung nicht zum Einsatz bei Rohren eines bestimmten Materials beschränkt, vielmehr kann sie bei Rohren aus unterschiedlichsten Materialien wie Metall, Keramik oder Kunststoff eingesetzt werden.

Die Verwendung von volumen-expandierbaren Balgkörpern, beispielsweise Gummibalgen, ist im Bereich der Rohrabdichtung bzw. Rohrsanierung wohl bekannt. So werden Gummibalge beispielsweise bei Rohrdichtkissen eingesetzt, die in ein Rohr eingeführt und an einem vorgegebenen Ort im Rohrinnenraum positioniert werden können. Nach Infiltrieren eines Fluids in den Innenraum des Gummibalgs, dehnt sich das Rohrdichtkissen aus und legt sich gegen eine Rohrinnenwand an, wodurch das Rohr abgeschlossen bzw. abgedichtet wird. Über die Menge des infiltrierten Fluids kann der Anpressdruck des Rohrdichtkissens flexibel eingestellt werden. Mögliche Einsatzgebiete eines solchen Rohrdichtkissens sind das Verschließen von Rohren bei Reparatur- oder Instandhaltungsmaßnahmen sowie die Verhinderung eines Wasserrückflusses bei Rohrbrüchen, Hochwasser, Kanalinspektionen, Kanalinspektionen etc.

Je nach Profil des Rohrs ist es bekannt, auf unterschiedliche Formen von Rohrdichtkissen bzw. Gummibälgen zurückzugreifen. Bekannt sind insbesondere zylindrische oder konusförmige Rohrdichtkissen.

So ist aus der EP 0 467 077 B1 beispielsweise ist ein aufblasbares Rohrdichtkissen bekannt, das an einer beliebigen Stelle in ein Rohr eingesetzt werden kann, um dieses abzudichten. Das dort beschriebene Kissen weist konische Endstücke sowie ein kreiszylindrisches Mittelstück auf. Die Abdichtung bei unterschiedlichen Rohrdurchmessern erfolgt linienförmig an den konischen Endstücken im Bereich desjenigen Durchmessers, der dem Innendurchmesser der Rohrleitung entspricht. Das im Allgemeinen Falten ausbildende zylindrische Mittelstück kann zur Abdichtung ebenfalls beitragen, wenn es mit einem geschlossenen, umlaufenden Dichtungsstreifen aus einem elastischen Material versehen ist, wobei der Dichtungsstreifen im aufgeblasenen Zustand eine Abdichtung zwischen dem zylindrischen Mittelstück und der Rohrinnenwand auch im Bereich der Falten bewirkt.

Aus DE 43 15 417 C1 bzw. EP 0 625 670 B1 sind ferner Rohrdichtkissen bekannt, die stationär in einer Rohrleitung montiert werden, um in einfacher Weise die Funktion von herkömmlichen Absperrschiebern zu erfüllen. Das aufblasbare Rohrdichtkissen ist dabei ringförmig ausgebildet und an der Halterung radial außen flach gelegt montiert. Beim Aufblasen wölbt sich das Rohrdichtkissen nach radial innen soweit auf, dass die radiale Innenwand allseitig gegen sich selbst gedrückt wird, um so die Rohrleitung sicher zu verschließen. Ein derartiges Rohrdichtkissen lässt sich ausschließlich stationär montiert verwenden.

DE 298 07 747 U1 beschreibt verschiedene Vorrichtungen zur Abdichtung von beschädigten Rohrleitungen mit harzgetränkten Abdichtmitteln.

US 2016/186911 A1 zeigt eine Vorrichtung zur Reparatur von Pipelines, welche eine aufblasbare Blase aus Gummi aufweist.

WO 2004/023088 A1 zeigt eine Vorrichtung zur Abdichtung eines Rohrs, unter anderem umfassend einen aufblasbaren Balg. Vor dem Aufbringen eines Harzmaterials kann ein Trennmittel auf die Vorrichtung aufgesprüht werden.

DE 10 2017 127458 A1 zeigt einen Sanierungspacker mit einem elastischen Grundkörper und einer sich zumindest abschnittsweise innerhalb des Grundkörpers in der Längsrichtung erstreckenden Öffnung.

Zur Sanierung von undichten und/oder beschädigten Stellen eines Rohres ist es zudem bekannt sog. Sanierungspacker einzusetzen. Dabei wird ein aufblasbarer Gummibalg auf einem in dem Rohr verfahrbaren oder verschiebbaren Sanierungspacker angeordnet. Auf dem Außenumfang des Gummibalgs können in Harz getränkte Sanierungsmatten angeordnet sein, die beim Aufblasen des Gummibalgs gegen die Innenwand des Rohres andrückbar sind und dort aushärten. Zudem kann das Harz beim Andrücken der Sanierungsmatte gegen die Rohrinnenwand in Risse oder offene Stellen des Rohres eindringen. Nach Entfernen des Sanierungspackers (samt Gummibalg) verbleibt die Sanierungsmatte sowie das Harz an der vormals undichten und/oder beschädigten Stelle des Rohres. Die hier angesprochenen Sanierungsmatten seien in der vorliegenden Erfindungsbeschreibung synonym als "Dichtungsmatten" bezeichnet.

Bei den bekannten Rohrdichtkissen- bzw. Sanierungspacker-Anwendungen, bzw. den dort verwendeten Gummibälgen hat sich gezeigt, dass im Falle der Anordnung von in Harz getränkten Dichtungsmatten (Sanierungsmatten), das herkömmlich verwendete Gummimaterial der Gummibälge, insbesondere bei Dauernutzung, durch die Einwirkung des Harzes beschädigt werden kann. Auch verbleiben häufig Harz-Rückstände auf der Gummioberfläche der Gummibälge. Im schlimmsten Fall kann die Einwirkung des Harzes zu Undichtigkeiten des Rohrdichtkissens führen.

Entsprechend liegt der vorliegenden Erfindung die Aufgabe zugrunde, eine Vorrichtung zum Abdichten einer undichten und/oder beschädigten Stelle an einer Rohrinnenwand eines Rohrs bereitzustellen, die eine erhöhte Robustheit und Widerstandsfähigkeit, insbesondere gegenüber Harz, aufweist und auch im Dauereinsatz zuverlässig verwendet werden kann.

Zur Lösung dieser Aufgabe wird eine Vorrichtung mit den Merkmalen des Anspruchs 1 vorgeschlagen.

Weiterhin liegt der vorliegenden Erfindung die Aufgabe zugrunde, ein zuverlässiges und widerstandsfähiges Verfahren zum Abdichten einer undichten und/oder beschädigten Stelle an einer Rohrinnenwand eines Rohrs bereitzustellen, welches zum Dauereinsatz geeignet ist.

Zur Lösung dieser Aufgabe wird ein Verfahren mit den Merkmalen des Anspruchs 5 vorgeschlagen.

Ferner liegt der vorliegenden Erfindung die Aufgabe zugrunde, eine Verwendung einer nach der Erfindung ausgebildeten Vorrichtung als Rohrdichtkissen oder als ein auf einem in einem Rohr verfahrbaren Sanierungspacker angeordnetes Rohrdichtkissen zu ermöglichen, wobei die Vorrichtung bei einer solchen Verwendung eine erhöhte Robustheit und Widerstandsfähigkeit, insbesondere gegenüber Harz, aufweist und eine zuverlässige Verwendung im Dauereinsatz ermöglicht ist.

Zur Lösung dieser Aufgabe wird eine Verwendung gemäß dem Anspruch 6 vorgeschlagen.

Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Die vorliegende Erfindung betrifft eine Vorrichtung zum Abdichten bzw. Sanieren einer undichten und/oder beschädigten Stelle an einer Rohrinnenwand eines Rohrs, insbesondere eines Abwasserrohrs, umfassend einen volumen-expandierbaren Balgkörper, der dazu ausgebildet ist, sich bei einer Positionierung des Balgkörpers im Bereich der undichten und/oder beschädigten Stelle im Innenraum des Rohrs, unter Infiltrieren eines Fluids, insbesondere eines gasförmigen Fluids, in einen Balgkörper-Innenraum unter Zunahme seines Volumens auszudehnen, wobei auf einer äußeren Oberfläche des Balgkörpers ein Trägerabschnitt ausgebildet ist, auf welchem eine geharzte Dichtungsmatte anordenbar ist, die in einem ausgedehnten Zustand des Balgkörpers im Bereich der undichten und/oder beschädigten Stelle durch Andrücken gegen die Rohrinnenwand des Rohrs an dieser befestigbar und aushärtbar ist.

Unter einer "Abdichtung" kann im Zusammenhang mit der vorliegenden Erfindung insbesondere ein lokales Abdichten einer undichten und/oder beschädigten Stelle an einer Rohrinnenwand verstanden werden. Ein solches lokales Abdichten kann dabei durch Abdichten der undichten und/oder beschädigten Stelle mit einer Dichtungsmatte erfolgen, welche vor dem Befestigen an der undichten und/oder beschädigten Stelle mit einem Harz versehen wird (z.B. mit diesem getränkt wird). Nach dem Andrücken der Dichtungsmatte gegen die Rohrinnenwand im Bereich der beschädigten und/oder undichten Stelle härtet das Harz aus. Das Harz kann dabei zumindest teilweise auch in die undichte und/oder beschädigte Struktur eindringen und diese ausfüllen. Gleichsam führt das aushärtende Harz zu einer Befestigung der Dichtungsmatte an der Rohrinnenwand. Die Dichtungsmatte - diese kann beispielsweise aus einem Glasfasergewebe (aber auch anderen Gewebetypen) gebildet sein - verstärkt dabei die Rohrinnenwand zusätzlich strukturell im Bereich der undichten und/oder beschädigten Stelle. Sofern die beschädigte Stelle keine Dichtheitsmängel aufweist, kann auch von einem Sanieren oder Instandsetzen einer solchen Stelle gesprochen werden.

Gleichsam kann unter einer "Abdichtung" zu verstehen sein, dass ein Rohr mit der o.g. Vorrichtung verschlossen wird. Denn durch Volumenexpansion des Balgkörpers kann sich dieser derart an die Rohrinnenwand anlegen, dass das Rohr vollständig verschlossen wird. Auch in diesem Fall wird das Rohr bzw. mittelbar auch undichte und/oder beschädigte Stellen "abgedichtet". Ferner kann die o.g. Vorrichtung zum Verschließen eines Rohres in einem unbeschädigten und/oder nicht von Dichtigkeitsfehlstellen betroffenen Bereich eingesetzt werden, sodass im Bereich der undichten und/oder beschädigten Stelle(n) eine Sanierung oder anderweitige Abdichtung vorgenommen werden kann. Auch dabei trägt die o.g. Vorrichtung also zu einer "Abdichtung" beschädigter und/oder undichter Stellen eines Rohres bei.

Die mit der Erfindung vorgeschlagene Vorrichtung kann als Rohrdichtkissen bzw. Sanierungskissen oder in Verbindung mit einem Sanierungspacker (oder einem Schubschlauch) zum Einsatz kommen. Auch ein Einsatz als Bypasskissen ist denkbar. Ferner ist es möglich, dass das Rohrdichtkissen mit einer Hindurchführung (z.B. beim Einsatz als Prüfkissen) versehen ist. Grundsätzlich kann der Balgkörper in beliebiger Form gefertigt werden, insbesondere in Formanpassung an das Rohr, in welchem die o.g. Vorrichtung eingesetzt werden soll. Der Balgkörper kann im Querschnitt eine kreisförmige, elliptische, ovale, eiförmige oder anderweitige Form annehmen.

Unter einer "undichten Stelle" ist im Zusammenhang mit der vorliegenden Erfindung eine jene Stelle an einer Rohrinnenwand eines Rohrs zu verstehen, durch welche entweder Fremdstoffe in das Rohr eindringen können oder ein Rohrinhalt aus dem Rohr entweichen kann. Eine "beschädigte Stelle" kann zwar gleichzeitig auch undicht sein, dies muss jedoch nicht zwingend der Fall sein. Beispielsweise muss eine im Anfangsstadium befindliche Beschädigung, z.B. ein Längs- oder Querriss (oder eine poröse Stelle) in der Rohrinnenwand, nicht zwingend zu einer Undichtigkeit des Rohrs führen. Um jedoch einer solchen Undichtigkeit als möglicher Spätfolge einer Beschädigung frühzeitig entgegen zu wirken, bietet sich eine Abdichtung, beispielsweise unter Einsatz der mit der Erfindung vorgeschlagenen Vorrichtung, an. Die vorliegende Erfindung eignet sich also ohne Weiteres auch zur Schadensprävention.

Unter einem volumen-expandierbaren Balgkörper ist im Zusammenhang der vorliegenden Erfindung ein Körper zu verstehen, dessen Volumen durch geeignete Fluid-Infiltration eine Volumen-Expansion erfahren kann, sich also ausdehnt. Die Volumen-Expansion kann dabei isotrop oder anisotrop (z.B. entlang einer Vorzugsrichtung) verlaufen, bei Positionierung eines zylindrischen (im Querschnitt kreisförmigen) Balgkörpers in einem Rohr erfolgt diese vornehmlich in radialer Richtung, also in Richtung der Rohrinnenwand. Auch kann die Expansion in sämtliche Raumrichtungen erfolgen, bei Positionierung eines zylindrischen Balgkörpers in einem Rohr beispielsweise in radialer Richtung und ggf. auch in Richtung längs des zylindrischen Balgkörpers. Je nach Form des Balgkörpers, kann auch eine isotrope (gleichmäßige) Ausdehnung in alle Raumrichtungen erfolgen (z.B. bei einem kugelförmigen Balgkörper), zumindest solange bis der Balgkörper in einer Raumrichtung an der Rohrinnenwand anstößt. Die Ausdehnung kann also durch das Rohr, insbesondere die Rohrinnenwand, begrenzt werden. Um eine ausreichende Ausdehnung zu ermöglichen, ist der Balgkörper aus einem dehnbaren oder elastischen Material gebildet.

Der Balgkörper dahingehend ausgebildet, dass er dicht und beständig gegenüber externen Medien (beispielsweise Wasser) ist, gleichsam aber auch mechanisch robust bzw. abriebbeständig gegenüber Festkörpern, beispielsweise der Rohrinnenwand, ist. Letzteres ist insbesondere beim Einbringen der Vorrichtung bzw. des Balgkörpers in das Rohr von besonderer Relevanz, denn dabei kommt es unweigerlich zur Reibung an der Rohrinnenwand.

Bei dem genannten Fluid kann es sich um ein gasförmiges oder flüssiges Fluid handeln. Als gasförmige Fluide kommen insbesondere Luft, CO₂ oder N₂ in Betracht. Flüssige Fluide können insbesondere Wasser oder Öle sein. Das Fluid kann über ein geeignetes Einlassventil in den Balgkörper infiltriert bzw. eingelassen werden, beispielsweise unter Druck (z.B. mittels einer geeigneten Pumpvorrichtung). Gleiches gilt für den Ablass des Fluids, welches über ein geeignetes Ablassventil aus dem Balgkörper entfernt werden kann. Grundsätzlich ist es auch möglich das infiltrierte Fluid auf eine vorbestimmte Temperatur zu erwärmen und erst dann in den Balgkörper-Innenraum (dieser stellt einen Hohlraum oder geeignete Hohlraum-Kammern bereit) einzulassen. Damit kann die Aushärtung des Harzes bzw. verbessert bzw. die Aushärtung eines warmhärtenden Harzes ermöglicht werden. Betont sei jedoch an dieser Stelle, dass mit der Erfindung ohne Weiteres auch die Anbringung von mit einem kalthärtenden Harz getränkten Dichtungsmatten ermöglicht ist, gleichsam auch eine Aushärtung des Harzes bei Raumtemperatur oder einer in dem abzudichtenden bzw. zu sanierenden Rohr vorliegenden Temperatur. Auch können an der Vorrichtung zusätzliche Heizmittel- oder Bestrahlungsmittel vorgesehen sein, die ein Aushärten des Harzes bewirken.

Auf einer äußeren Oberfläche des Balgkörpers ist - wie erwähnt - ein Trägerabschnitt ausgebildet, auf welchem eine geharzte Dichtungsmatte anordenbar ist. Der Trägerabschnitt kann in einem Teilbereich der äußeren Oberfläche ausgebildet sein, gleichsam können mehrere (beabstandet zu einander angeordnete) Trägerabschnitte auf der äußeren Oberfläche des Balgkörpers ausgebildet sein. Alternativ kann auch die gesamte Oberfläche des Balgkörpers als Trägerabschnitt fungieren und als ein solcher ausgebildet sein. Letzteres ist vorteilhaft, da es eine freie Anordnung einer Dichtungsmatte auf einer beliebigen Stelle der äußeren Oberfläche des Balgkörpers ermöglicht. Die Ausbildung eines geeigneten Trägerabschnitts ist vorteilhaft, da sich der Balgkörper so nach dem Befestigen des geharzten Dichtungskissens an der Rohrinnenwand relativ einfach entfernen lässt, der Trägerabschnitt bewirkt also eine erleichterte Trennung des Balgkörpers von dem Dichtungskissen, beispielsweise nach Art eines Trennmittels. Vorteilhaft ist es, wenn der Trägerabschnitt in Bezug auf das verwendete Harz anti-Hafteigenschaften aufweist. Gleichsam muss auch der Trägerabschnitt die gewünschten Anforderungen an die Dichtigkeit, Materialrobustheit, Abriebbeständigkeit und Dehnbarkeit erfüllen.

Um diesen Anforderungen gerecht zu werden, zeichnet sich die Vorrichtung erfindungsgemäß dadurch aus, dass der Trägerabschnitt aus Paragummi gebildet ist.

Es hat sich überraschend gezeigt, dass Paragummi eine besondere Widerstandsfähigkeit gegenüber Harz aufweist. Wie erwähnt, kann auf der mit der Erfindung vorgeschlagenen Vorrichtung, insbesondere dem Balgkörper bzw. einem dort vorgesehenen Trägerabschnitt, eine geharzte (mit Harz versehene oder in Harz getränkte) Dichtungsmatte angeordnet werden. Dabei tritt das Harz unweigerlich auch mit der äußeren Oberfläche des Balgkörpers in Kontakt. Entsprechend ist es von entscheidender Bedeutung, dass die äußere Oberfläche eine ausreichende Widerstandsfähigkeit gegenüber dem Harz aufweist und des Weiteren eine ausreichende Trennbarkeit der äußeren Oberfläche von der mit Harz versehenen Dichtungsmatte ermöglicht ist (Trennwirkung). Diese Anforderungen werden von Paragummi als Material des Trägerabschnitts in besonderem Maße erfüllt. Die Verwendung von Paragummi ermöglicht somit einen dauerhaften und wiederholten Einsatz der mit der Erfindung vorgeschlagenen Vorrichtung zu Abdichtungs- und/oder Sanierungszwecken unter verbesserter Harzbeständigkeit der äußeren Oberfläche des Balgkörpers. Entsprechend wird die Langlebigkeit einer solchen Vorrichtung erhöht. Paragummi weist eine außerordentlich hohe Elastizität auf, eine entscheidende Eigenschaft zur Gewährleistung einer ausreichenden Volumenausdehnung des Balgkörpers. Bei Paragummi handelt es sich um einen schwach vulkanisierten Gummi, der sich einfach verarbeiten und an dem Balgkörper anbringen lässt.

Der aus Paragummi gebildete Trägerabschnitt führt - bei Anordnung eines geharzten Dichtungskissens auf dem Trägerabschnitt - dazu, dass sich der Balgkörper nach dem Befestigen des geharzten Dichtungskissens an der Rohrinnenwand relativ einfach entfernen lässt, das Material des Trägerabschnitts bewirkt also eine erleichterte Trennung von dem Dichtungskissen, beispielsweise nach Art eines Trennmittels. Das Paragummi weist in Bezug zu dem Harz also anti-Hafteigenschaften auf.

Wie schon vorangehend erwähnt, ist der Trägerabschnitt aus Paragummi gebildet. Der Trägerabschnitt kann in einem Teilbereich der äußeren Oberfläche des Balgkörpers ausgebildet sein. Jedoch kann ohne Weiteres auch die gesamte äußere Oberfläche des Balgkörpers einen Trägerabschnitt bereitstellen, d.h. aus Paragummi gebildet sein. Unter dem hier verwendeten Term, wonach der Trägerabschnitt aus Paragummi "gebildet" ist, kann im Sinne der vorliegenden Erfindung zu verstehen sein, dass das den Balgkörper bildende Material (z.B. eine äußere Materiallage des Balgkörpers) als solches den Trägerabschnitt bereitstellt. Weiterhin kann unter "gebildet" zu verstehen sein, dass die äußere Oberfläche des Balgkörpers eine "Beschichtung" mit Paragummi aufweist, welche sodann den Trägerabschnitt ausbildet. Die Beschichtung kann partiell oder vollflächig auf die äußere Oberfläche des Balgkörpers aufgebracht sein. Unter einer "Beschichtung" ist im Kontext der vorliegenden Erfindung also das Aufbringen einer oder mehrerer Schichten von Paragummi auf die äußerte Oberfläche des Balgkörpers (z.B. einer äußeren Materiallage) zu verstehen, um so einen Trägerabschnitt auszubilden.

Nachfolgend seien die in den Unteransprüchen angegebenen vorteilhaften Ausgestaltungen sowie weitere vorteilhafte (oder mögliche) Ausgestaltungen der mit der Erfindung vorgeschlagenen Vorrichtung im Detail beschrieben.

Nach einer ersten Alternative einer mit der Erfindung vorgeschlagenen Vorrichtung ist vorgesehen, dass der Balgkörper aus einem mehrlagigen Material gefertigt ist, wobei die äußere Oberfläche des Balgkörpers von einer äußeren Materiallage des mehrlagigen Materials gebildet ist. In einer Ausgestaltung dieser Alternative ist die äußere Materiallage zumindest teilweise aus Paragummi gebildet und bildet den Trägerabschnitt aus. In einer Ausgestaltung dieser Alternative weist die äußere Materiallage eine den Trägerabschnitt ausbildende Paragummi-Beschichtung auf, welche die äußere Oberfläche des Balgkörpers zumindest teilweise bedeckt.

Unter der Angabe, dass die äußere Materiallage des Balgkörpers zumindest teilweise aus Paragummi gebildet ist, ist zu verstehen, dass zumindest ein Abschnitt oder Bereich der äußeren Materiallage vollständig aus Paragummi gebildet ist. Auch können mehrere - beabstandet zueinander angeordnete - aus Paragummi gebildete Abschnitte vorgesehen sein. Daran angrenzende Abschnitte können indes aus anderweitigem Material gebildet sein. Alternativ kann die äußere Materiallage aber auch aus mehreren Teillagen aufgebaut sein, von denen lediglich die äußere Teil-Lage zumindest teilweise (also bereichs- oder flächenweise) aus Paragummi gebildet ist, auch diese Variante ist durch jene Angabe einer zumindest teilweisen Ausbildung des Balgkörpers aus Paragummi umfasst. Eine "Ausbildung" aus Paragummi ist von einer Beschichtung mit Paragummi (Variante der Paragummi-Beschichtung) zu unterscheiden.

Unter der Ausbildung des Balgkörpers aus einem mehrlagigen Material ist zu verstehen, dass mehrere Lagen (zumindest aber zwei Lagen) gleicher oder unterschiedlicher Materialien stoffschlüssig oder formschlüssig miteinander verbunden werden und eine Balgkörperwand ausbilden. Dabei muss der Balgkörper nicht einteilig ausgebildet sein, vielmehr kann dieser mehrere miteinander verbundene Teile aufweisen, z.B. im Falle einer zylindrischen Geometrie des Balgkörpers zum Beispiel ein Mantelteil, das mit stirnseitigen Endteilen verbunden ist. Die genannten Teile können jeweils aus mehreren Lagen gleicher oder unterschiedlicher Materialien gebildet sein. Auch bei anderweitigen Geometrien von Balgkörpern ist es bekannt, diese aus mehreren Teilen zu fertigen und diese miteinander zu verbinden. Die Möglichkeit der Fertigung eines Balgkörpers aus mehreren Teilen (jeweils umfassend eine oder mehrere Materiallagen) zusammensetzenden Teilen ist bei der Fertigung von Rohrdichtkissen oder Balgkörpern für Sanierungspacker wohl bekannt. Die Verbindung einzelner Teile eines Balgkörpers (z.B. eines Mantelteils mit Endteilen) kann durch Vernähen, Verstricken, Verschweißen, Verkleben, Vernieten, Verschrauben etc. bereitgestellt werden. Materiallagen können ebenfalls durch die vorgenannten Verbindungsarten miteinander verbunden werden. Jedoch können auch anderweitige Methoden herangezogen werden, um die Materiallagen miteinander zu verbunden, beispielsweise Thermoforming, thermisches Fügen, Heißschweißen oder anderweitige Verfahren.

Bei einer Fertigung des Balgkörpers aus mehreren Lagen kann die äußere Lage dazu vorgesehen sein, den Balgkörper nach innen abzudichten, also ein Eindringen von Flüssigkeiten, Gasen oder Feststoffen in den Innenraum des Balgkörpers zu verhindern, gleichsam aber auch ein Austreten vom Inhalt des Balgkörpers (z.B. Fluids) in Richtung nach außen zu vermeiden. Innere Lagen können sodann eine Stützfunktion erfüllen, um dem Balgkörper ausreichende mechanische Stabilität zu verleihen. Dies schließt jedoch nicht aus, dass auch innenliegende Materiallagen zur Abdichtung des Balgkörpers beitragen.

Nach einer zweiten Alternative ist der Balgkörper aus einer einzigen Materiallage gefertigt, wobei die äußere Oberfläche des Balgkörpers von der einzigen Materiallage gebildet ist. Diese (einzige) Materiallage kann zumindest teilweise aus Paragummi gebildet sein. Die Materiallage weist zusätzlich oder alternativ eine den Trägerabschnitt ausbildende Paragummi-Beschichtung auf, welche die äußere Oberfläche des Balgkörpers zumindest teilweise bedeckt.

Unabhängig davon, ob der Balgkörper aus einer Materiallage oder mehreren Materiallagen aufgebaut ist, ist es erforderlich, dass zumindest in jenen Bereichen des Balgkörpers, in welchen bei funktionsgemäßer Verwendung eine geharzte Dichtungsmatte angeordnet werden soll, die äußere Materiallage mit Paragummi beschichtet ist oder aus Paragummi ausgebildet wird.

Zur Ausbildung der Paragummi-Beschichtung kann vorgesehen sein, diese auf den Balgkörper auf zu vulkanisieren ist. Im Wege einer solchen Beaufschlagung (Vulkanisation) kann eine mechanisch stabile und langlebige Befestigung der Paragummi-Beschichtung gewährleistet werden. Unter einer Vulkanisation ist im Allgemeinen ein Verfahren zu verstehen, bei welchem Kautschuk in elastomeren Gummi überführt wird. Vorliegend kann die Paragummi-Beschichtung beispielsweise im Wege einer klassischen Schwefelvulkanisation, einer Vulkanisation mit Peroxiden, Metalloxiden oder strahlungsinduziert erfolgen.

Nach einer weiteren Ausgestaltung einer mit der Erfindung vorgeschlagenen Vorrichtung kann vorgesehen sein, dass die Dichtungsmatte ein Glasfasergewebe als Trägermaterial für ein Harz umfasst. Bei einem Glasfasergewebe handelt es sich um einen wichtigen Konstruktionswerkstoff, der beispielsweise die mechanischen Eigenschaften von Verbundbauteilen (insbesondere Glasfaser-Kunststoffverbundbauteilen) verbessern kann. Gleichsam eignet sich Glasfasergewebe aber auch ausgezeichnet, als Stütz- und/oder Trägermaterial, welches zur strukturellen Verstärkung beschädigter Werkstoffoberflächen (z.B. eines Rohrs) eingesetzt werden kann. Ein solches Glasfasergewebe lässt sich flach und bündig an eine Oberfläche anlegen und an dieser befestigen. Glasfasergewebe zeichnet sich ferner dadurch aus, dass es besonders alterungs- und witterungsbeständig (feuchtigkeitsbeständig), chemisch inert und nicht brennbar ist. Letztlich weist Glasfasergewebe ausgezeichnete Eigenschaften auf, um in Rohren, insbesondere Abwasserrohren, eingesetzt zu werden. Ferner weist Glasfasergewebe ein relativ hohes Elastizitätsmodul auf, was ebenfalls förderlich ist bei Verwendung auf einem volumen-expandierbaren Balgkörper sowie der Anordnung an gekrümmten Oberflächen wie Rohrinnenwänden. Ferner ist Glasfasergewebe ein geeigneter Träger für ein Harz, welches - wie eingangs beschrieben - zur Befestigung des Glasfasergewebes an der Rohrinnenwand eingesetzt wird und zudem die beschädigte und/oder undichte Stelle zusammen mit der Dichtungsmatte (dem Glasfasergewebe) abdichtet. Das verwendete Harz kann - muss aber nicht - beispielsweise ein Mehrkomponenten-Harz sein.

Nach einer weiteren Ausgestaltung einer mit der Erfindung vorgeschlagenen Vorrichtung kann vorgesehen sein, dass der Balgkörper ein oder mehrere Ventile zum Ein- und Ablassen des Fluids aufweist. Die Ventile können beim Einsatz mit Leitungen, Schläuchen etc. verbunden werden, um den Balgkörper an Ort und Stelle (d.h. innerhalb des Rohrs) mit dem Fluid zu befüllen und zu expandieren. Auch im Bereich der Ventile muss gewährleistet sein, dass der Balgkörper nach außen dicht ist, d.h. dass ein Eindringen externer Stoffe in den Balgkörper bzw. ein ungewolltes Entweichen von Fluid vermieden wird.

Wie eingangs erwähnt wird die der Erfindung zugrunde liegende Aufgabe zudem mit einem Verfahren zum Abdichten bzw. Sanieren einer undichten und/oder beschädigten Stelle an einer Rohrinnenwand eines Rohrs gelöst. Bei dem Rohr kann es sich - wie erwähnt -um ein Abwasserrohr handeln. Verfahrensgemäß sind die folgenden Schritte vorgesehen:
a. Bereitstellen eines volumen-expandierbaren Balgkörpers, wobei auf einer äußeren Oberfläche des Balgkörpers ein Trägerabschnitt für eine geharzte Dichtungsmatte ausgebildet ist; und wobei der Trägerabschnitt aus Paragummi gebildet ist und wobei
   aa) der Balgkörper aus einem mehrlagigen Material gefertigt ist, wobei die äußere Oberfläche des Balgkörpers von einer äußeren Materiallage des mehrlagigen Materials gebildet ist und entweder die äußere Materiallage zumindest teilweise aus Paragummi gebildet ist und den Trägerabschnitt ausbildet oder die äußere Materiallage eine den Trägerabschnitt ausbildende Paragummi-Beschichtung aufweist, welche die äußere Oberfläche des Balgkörpers zumindest teilweise bedeckt
      oder
   bb) der Balgkörper aus einer einzigen Materiallage gefertigt ist, wobei die äußere Oberfläche des Balgkörpers von der einzigen Materiallage gebildet ist und die Materiallage eine den Trägerabschnitt ausbildende Paragummi-Beschichtung aufweist, welche die äußere Oberfläche des Balgkörpers zumindest teilweise bedeckt;
b. Anordnen einer geharzten Dichtungsmatte auf dem Trägerabschnitt;
c. Positionieren des Balgkörpers im Innenraum des Rohrs im Bereich der undichten und/oder beschädigten Stelle;
d. Infiltrieren eines Fluids, insbesondere eines gasförmigen Fluids, in einen Balgkörper-Innenraum, wobei sich der Balgkörper in Folge der Fluid-Infiltration unter Zunahme seines Volumens ausdehnt;
e. Befestigen der geharzten Dichtungsmatte an der Rohrinnenwand durch
   i. Andrücken der geharzten Dichtungsmatte gegen die undichte und/oder beschädigte Stelle an der Rohrinnenwand des Rohrs in Folge der Ausdehnung des Volumens des Balgkörpers, und
   ii. Aushärten der geharzten Dichtungsmatte;
f. Entfernen des Balgkörpers aus dem Rohr.

Unter der im Verfahrensschritt a. erwähnten "Bereitstellung" des Balgkörpers kann im Sinne des Verfahrens sowohl eine Fertigung des Balgkörpers als auch eine anderweitige Bereitstellung (beispielsweise ein Zukauf oder ein simples Anliefern, Auspacken oder Vorbereiten) des Balgkörpers verstanden werden. Unter einer geharzten Dichtungsmatte ist - wie erwähnt - eine mit einem Harz versehene, beaufschlagte oder in Harz getränkte Dichtungsmatte zu verstehen. Die Dichtungsmatte wird getreu dem Verfahrensschritt b. auf dem Trägerabschnitt angeordnet, also positioniert. Auch können mehrere Dichtungsmatten auf einem oder mehreren Trägerabschnitten des Balgkörpers angeordnet werden. Die Anordnung kann manuell oder maschinell erfolgen.

Wie im Schritt c. erwähnt wird der Balgkörper im Innenraum des Rohrs im Bereich der undichten und/oder beschädigten Stelle positioniert. Die undichte und/oder beschädigte Stelle kann zuvor mittels eines geeigneten Erkundungsverfahrens, beispielsweise eines Kamera-basierten Verfahrens, erfasst und lokalisiert worden sein. Auf Basis der Lokalisation kann dann der Balgkörper (in einem nicht ausgedehnten Zustand) an der entsprechenden Stelle des Rohrinnenraums positioniert werden, beispielsweise unter Einsatz eines Positioniermittels. Ein Positioniermittel kann beispielsweise ein Transportwagen, eine Roll- oder Schubvorrichtung sein. Auch können an dem Balgkörper Rollen oder Räder angeordnet sein, sodass der Balgkörper mittels eines Schubschlauchs innerhalb des Rohrs positioniert werden kann.

Nach dem Positionieren wird (über eine geeignete Zuleitung und Ventile) ein Fluid (z.B. Luft) in den Balgkörper-Innenraum infiltriert bzw. eingeleitet. Dabei dehnt sich der Balgkörper in Richtung der Rohrinnenwand aus. Dadurch wird die geharzte Dichtungsmatte an die undichte und/oder beschädigte Stelle an der Rohrinnenwand des Rohrs angedrückt. Dabei oder im Anschluss daran kann die geharzte Dichtungsmatte aushärten. Zuletzt wird der Balgkörper aus dem Rohr entfernt.

Eine erfindungsgemäß ausgebildete Vorrichtung kann als Rohrdichtkissen oder als ein auf einem in einem Rohr verfahrbaren Sanierungspacker angeordnetes Rohrdichtkissen verwendet werden.

Weitere Merkmale und Vorteile der Erfindung ergeben sich aus der folgenden Beschreibung eines nicht einschränkend zu verstehenden Ausführungsbeispiels der Erfindung, welches im Folgenden unter Bezugnahme auf die Zeichnung näher erläutert wird. In dieser Zeichnung zeigt schematisch:
- Fig. 1: einen innerhalb eines Rohrs im Bereich einer undichten und/oder beschädigten Stelle positionierten Balgkörper als Bestandteil einer erfindungsgemäßen Vorrichtung, wobei der Balgkörper in einem nicht volumen-expandierten Zustand dargestellt ist;
- Fig. 2: die Vorrichtung nach Fig. 1, wobei der Balgkörper in einem Volumen-expandierten Zustand dargestellt ist.

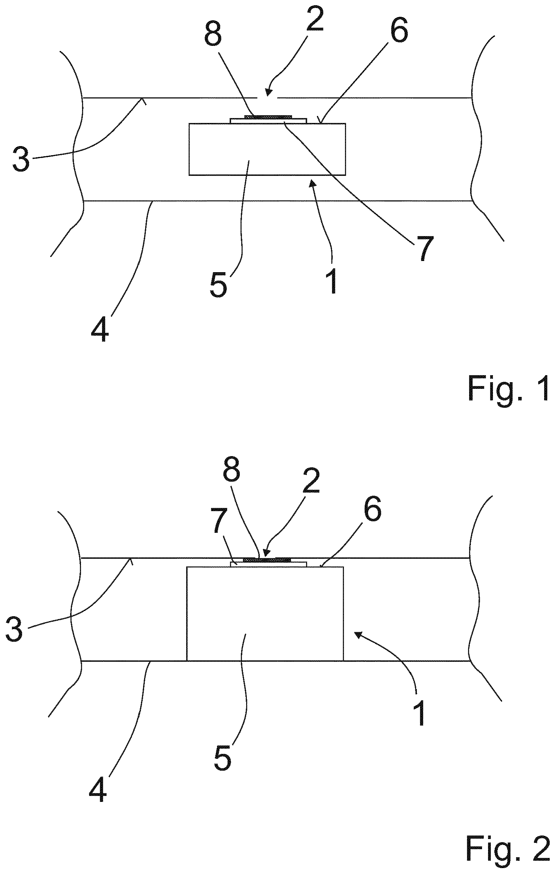

In der Figur 1 ist schematisch eine erfindungsgemäße Vorrichtung 1 zum Abdichten bzw. Sanieren einer undichten und/oder beschädigten Stelle 2 an einer Rohrinnenwand 3 eines Rohrs 4 dargestellt. Bei dem Rohr 4 kann es sich beispielsweise um ein Abwasserrohr handeln, welches einen Riss als Beispiel für eine undichte und/oder beschädigte Stelle 2 aufweist, wobei ein solcher Riss zu einer Undichtigkeit des Rohrs 4 führen kann.

Die dargestellte Vorrichtung 1 umfasst einen volumen-expandierbaren Balgkörper 5, der im Bereich der undichten und/oder beschädigten Stelle 2 des Rohrs 4 positioniert ist. Auf einer äußeren Oberfläche 6 des Balgkörpers 5 ist ein Trägerabschnitt 7 ausgebildet, auf welchem eine geharzte Dichtungsmatte 8 angeordnet ist. Im vorliegenden Beispiel ist der Trägerabschnitt 7 in Form einer teilweisen Beschichtung der äußeren Oberfläche 6 des Balgkörpers 5 ausgebildet. Die geharzte Dichtungsmatte 8 wird vor der Anordnung auf dem Trägerabschnitt 7 mit Harz versehen bzw. in Harz getränkt.

Nach der Positionierung des Balgkörpers 5 im Bereich der undichten und/oder beschädigten Stelle 2 wird ein Balgkörper-Innenraum mit einem Fluid, beispielsweise Luft, infiltriert (z.B. aufgeblasen). Dabei dehnt sich der Balgkörper 5 unter Zunahme seines Volumens aus. In einem ausgedehnten Zustand des Balgkörpers 5 - vgl. Fig. 2 - wird die geharzte Dichtungsmatte 8 im Bereich der undichten und/oder beschädigten Stelle 2 gegen die Rohrinnenwand 3 des Rohrs 4 angedrückt. In Folge dessen härtet die geharzte Dichtungsmatte 8 aus und verbleibt nach Entfernen des Balgkörpers 5 an der undichten und/oder beschädigten Stelle 2 des Rohrs 4. Vor dem Entfernen des Balgkörpers 5 wird das Fluid (z.B. Luft) über ein Ventil abgelassen und das Volumen des Balgkörpers 5 nimmt ab. Danach kann der Balgkörper 5 bzw. die Vorrichtung 1 in einfacher Weise aus dem Rohr 4 entfernt werden. Wie eingangs erläutert, ist der Trägerabschnitt 7 erfindungsgemäß aus Paragummi gebildet.

### Bezugszeichenliste

- 1: Vorrichtung
- 2: Stelle
- 3: Rohrinnenwand
- 4: Rohr
- 5: Balgkörper
- 6: äußere Oberfläche
- 7: Trägerabschnitt
- 8: Dichtungsmatte

## Patentansprüche

1. Vorrichtung (1) zum Abdichten bzw. Sanieren einer undichten und/oder beschädigten Stelle (2) an einer Rohrinnenwand (3) eines Rohrs (4), insbesondere eines Abwasserrohrs, umfassend einen volumen-expandierbaren Balgkörper (5), der dazu ausgebildet ist, sich bei einer Positionierung des Balgkörpers (5) im Bereich der undichten und/oder beschädigten Stelle (2) im Innenraum des Rohrs, unter Infiltrieren eines Fluids, insbesondere eines gasförmigen Fluids, in einen Balgkörper-Innenraum unter Zunahme seines Volumens auszudehnen, wobei auf einer äußeren Oberfläche (6) des Balgkörpers (5) ein Trägerabschnitt (7) ausgebildet ist, auf welchem eine geharzte Dichtungsmatte (8) anordenbar ist, die in einem ausgedehnten Zustand des Balgkörpers (5) im Bereich der undichten und/oder beschädigten Stelle (2) durch Andrücken gegen die Rohrinnenwand (3) des Rohrs (4) an dieser befestigbar und aushärtbar ist, wobei der Trägerabschnitt (7) aus Paragummi gebildet ist, wobei
a) der Balgkörper (5) aus einem mehrlagigen Material gefertigt ist, wobei die äußere Oberfläche (6) des Balgkörpers (5) von einer äußeren Materiallage des mehrlagigen Materials gebildet ist und entweder die äußere Materiallage zumindest teilweise aus Paragummi gebildet ist und den Trägerabschnitt (7) ausbildet oder die äußere Materiallage eine den Trägerabschnitt (7) ausbildende Paragummi-Beschichtung aufweist, welche die äußere Oberfläche (6) des Balgkörpers (5) zumindest teilweise bedeckt oder
b) der Balgkörper aus einer einzigen Materiallage gefertigt ist, wobei die äußere Oberfläche (6) des Balgkörpers (5) von der einzigen Materiallage gebildet ist und die Materiallage eine den Trägerabschnitt (7) ausbildende Paragummi-Beschichtung aufweist, welche die äußere Oberfläche (6) des Balgkörpers (5) zumindest teilweise bedeckt.

2. Vorrichtung (1) nach einem Anspruch 1, **dadurch gekennzeichnet, dass** die Dichtungsmatte (8) ein Glasfasergewebe als Trägermaterial für ein Harz umfasst.

3. Vorrichtung (1) nach Anspruch 2, **dadurch gekennzeichnet, dass** das Harz ein Mehrkomponenten-Harz ist.

4. Vorrichtung (1) nach einem der vorangehenden Ansprüche, **dadurch gekennzeichnet, dass** der Balgkörper (5) ein oder mehrere Ventile zum Ein- und Ablassen des Fluids aufweist.

5. Verfahren zum Abdichten bzw. Sanieren einer undichten und/oder beschädigten Stelle (2) an einer Rohrinnenwand (3) eines Rohrs (4), insbesondere eines Abwasserrohrs, umfassend die folgenden Schritte:
a. Bereitstellen eines volumen-expandierbaren Balgkörpers (5), wobei auf einer äußeren Oberfläche (6) des Balgkörpers (5) ein Trägerabschnitt (7) für eine geharzte Dichtungsmatte (8) ausgebildet ist, und wobei der Trägerabschnitt (7) aus Paragummi gebildet ist, wobei
aa) der Balgkörper (5) aus einem mehrlagigen Material gefertigt ist, wobei die äußere Oberfläche (6) des Balgkörpers (5) von einer äußeren Materiallage des mehrlagigen Materials gebildet ist und entweder die äußere Materiallage zumindest teilweise aus Paragummi gebildet ist und den Trägerabschnitt (7) ausbildet oder die äußere Materiallage eine den Trägerabschnitt (7) ausbildende Paragummi-Beschichtung aufweist, welche die äußere Oberfläche (6) des Balgkörpers (5) zumindest teilweise bedeckt oder
bb) der Balgkörper aus einer einzigen Materiallage gefertigt ist, wobei die äußere Oberfläche (6) des Balgkörpers (5) von der einzigen Materiallage gebildet ist und die Materiallage eine den Trägerabschnitt (7) ausbildende Paragummi-Beschichtung aufweist, welche die äußere Oberfläche (6) des Balgkörpers (5) zumindest teilweise bedeckt;
b. Anordnen einer geharzten Dichtungsmatte (8) auf dem Trägerabschnitt (7);
c. Positionieren des Balgkörpers (5) im Innenraum des Rohrs im Bereich der undichten und/oder beschädigten Stelle (2);
d. Infiltrieren eines Fluids, insbesondere eines gasförmigen Fluids, in einen Balgkörper-Innenraum, wobei sich der Balgkörper (5) in Folge der Fluid-Infiltration unter Zunahme seines Volumens ausdehnt;
e. Befestigen der geharzten Dichtungsmatte (8) an der Rohrinnenwand (3) durch:
i. Andrücken der geharzten Dichtungsmatte (8) gegen die undichte und/oder beschädigte Stelle (2) an der Rohrinnenwand (3) des Rohrs (4) in Folge der Ausdehnung des Volumens des Balgkörpers (5), und
ii. Aushärten der geharzten Dichtungsmatte (8);
f. Entfernen des Balgkörpers (5) aus dem Rohr (4).

6. Verwendung einer nach einem der Ansprüche 1 bis 4 ausgebildeten Vorrichtung (1) als Rohrdichtkissen oder als ein auf einem in einem Rohr (4) verfahrbaren Sanierungspacker angeordnetes Rohrdichtkissen.

## Claims

1. Device (1) for sealing or repairing a leaking and/or damaged location (2) on an inner pipe wall (3) of a pipe (4), in particular a waste water pipe, comprising a volume-expandable bellows body (5) which is configured to expand when the bellows body (5) is positioned in the region of the leaking and/or damaged location (2) in the interior of the pipe, with infiltration of a fluid, in particular a gaseous fluid, into a bellows body interior, with an increase in its volume, wherein a carrier portion (7) is formed on an outer surface (6) of the bellows body (5), on which carrier portion (7) a resin sealing mat (8) can be arranged, which in an expanded state of the bellows body (5) in the region of the leaking and/or damaged location (2) can be connected to the inner pipe wall (3) of the pipe (4) by pressing against the latter and can be hardened, wherein the carrier portion (7) is formed from para rubber, wherein
a) the bellows body (5) is made from a multilayer material, the outer surface (6) of the bellows body (5) being formed by an outer material layer of the multilayer material and either the outer material layer being formed at least partially from para rubber and forming the carrier section (7) or the outer material layer having a para rubber coating forming the carrier section (7), which coating at least partially covers the outer surface (6) of the bellows body (5),
or
b) the bellows body is made from a single layer of material, wherein the outer surface (6) of the bellows body (5) is formed by the single layer of material and the layer of material has a para-rubber coating forming the carrier section (7), which coating at least partially covers the outer surface (6) of the bellows body (5).

2. Device (1) according to claim 1, **characterised in that** the sealing mat (8) comprises a glass fibre woven fabric as a carrier material for a resin.

3. Device (1) according to claim 2, **characterised in that** the resin is a multicomponent resin.

4. Device (1) according to one of the preceding claims, **characterised in that** the bellows body (5) has one or more valves for introducing and discharging the fluid.

5. Method for sealing or repairing a leaking and/or damaged location (2) on an inner pipe wall (3) of a pipe (4), in particular a waste water pipe, comprising the following steps:
a. providing a volume-expandable bellows body (5), wherein a carrier section (7) for a resin sealing mat (8) is formed on an outer surface (6) of the bellows body (5), and wherein the carrier section (7) is formed from para rubber, wherein
aa) the bellows body (5) is made of a multilayer material, wherein the outer surface (6) of the bellows body (5) is formed by an outer material layer of the multilayer material and either the outer material layer is formed at least partially of para rubber and forms the carrier section (7) or the outer material layer has a para rubber coating forming the carrier section (7), which coating at least partially covers the outer surface (6) of the bellows body (5)
or
bb) the bellows body is made from a single layer of material, wherein the outer surface (6) of the bellows body (5) is formed by the single layer of material and the layer of material has a para-rubber coating forming the carrier section (7), which coating at least partially covers the outer surface (6) of the bellows body (5);
b. arranging a resin sealing mat (8) on the carrier section (7);
c. positioning the bellows body (5) in the interior of the pipe in the area of the leaking and/or damaged location (2);
d. infiltrating a fluid, in particular a gaseous fluid, into a bellows body interior, wherein the bellows body (5) expands as a result of the fluid infiltration with an increase in its volume;
e. connecting the resin sealing mat (8) to the inner pipe wall through:
i. pressing the resin sealing mat (8) against the leaking and/or damaged location (2) on the inner pipe wall (3) of the pipe (4) as a result of the expansion of the volume of the bellows body (5), and
ii. curing the resin sealing mat (8);
f. removing the bellows body (5) from the pipe (4).

6. Use of a device (1) formed according to one of the claims 1 to 4 as a pipe sealing pad or as a sealing pad arranged on a mobile rehabilitation packer movable in a pip e (4).

## Revendications

1. Dispositif (1) d'étanchéification ou de réparation d'une zone fuyante et/ou endommagée (2) sur une paroi interne (3) d'un tube (4), en particulier d'un tuyau d'évacuation d'eaux usées, comprenant un corps à soufflet expansible en volume (5), qui est constitué pour se dilater lors d'un positionnement du corps à soufflet (5) dans le secteur de la zone fuyante et/ou endommagée (2) dans l'espace intérieur d'un tube, par infiltration d'un fluide, en particulier d'un fluide gazeux , dans un espace intérieur de corps à soufflet par augmentation de son volume, sachant qu'une section porteuse (7) est constituée sur une surface extérieure (6) du corps à soufflet (5) sur laquelle peut être disposée une natte d'étanchéité résinée (8), qui peut être fixée et durcie sur celle-ci par compression contre la paroi interne (3) du tube (4) à un état dilaté du corps à soufflet (5) dans le secteur de la zone fuyante et/ou endommagée (2), sachant que la section porteuse (7) est formée de caoutchouc Para , sachant que
a) le corps à soufflet (5) est fabriqué à partir d'un matériau multicouche, sachant que la surface extérieure (6) du corps à soufflet (5) est formée d'une couche de matériau extérieure du matériau mmulticouche et, soit la couche de matériau extérieure est formée au moins en partie de caoutchouc Para et constitue la section porteuse (7), soit la couche de matériau extérieure comporte un revêtement de caoutchouc Para constituant la section porteuse (7), lequel couvre au moins en partie la surface extérieure (6) du corps à soufflet (5), ou
b) le corps à soufflet est fabriqué à partir d'une couche de matériau unique, sachant que la surface extérieure (6) du corps à soufflet (5) est formée de la couche de matériau unique et la couche de matériau comporte un revêtement de caoutchouc Para constituant la section porteuse (7), lequel couvre au moins en partie la surface extérieure (6) du corps à soufflet (5).

2. Dispositif (1) selon la revendication 1, ***caractérisé en ce que*** la natte d'étanchéité (8) comprend un tissu de fibres de verre en tant que matériau de support pour une résine.

3. Dispositif (1) selon la revendication 2, ***caractérisé en ce que*** la résine est une résine à composants multiples.

4. Dispositif (1) selon l'une quelconque des revendications précédentes, ***caractérisé en ce que*** le corps à soufflet (5) comporte une ou plusieurs soupapes pour l'admission et l'évacuation du fluide.

5. Procédé d'étanchéification ou de réparation d'une zone fuyante et/ou endommagée (2) sur une paroi interne (3) d'un tube (4), en particulier d'un tuyau d'évacuation des eaux usées, comprenant les étapes suivantes :
a) fourniture d'un corps à soufflet expansible en volume (5), sachant qu'une section porteuse (7) pour une natte d'étanchéité résinée (8) est constituée sur une surface extérieure (6) du corps à soufflet (5) et sachant que la section porteuse (7) est formée de caoutchouc Para, sachant que
aa) le corps à soufflet (5) est fabriqué à partir d'un matériau multicouche, sachant que la surface extérieure (6) du corps à soufflet (5) est formée d'une couche de matériau extérieure du matériau multicouche et, soit la couche de matériau extérieure est formée au moins en partie de caoutchouc Para et constitue la section porteuse (7), soit la couche de matériau extérieure comporte un revêtement de caoutchouc Para constituant la section porteuse (7), lequel couvre au moins en partie la surface extérieure (6) du corps à soufflet (5), ou
bb) le corps à soufflet est fabriqué à partir d'une couche de matériau unique, sachant que la surface extérieure (6) du corps à soufflet (5) est formée de la couche de matériau unique et la couche de matériau comporte un revêtement de caoutchouc Para constituant la section porteuse (7), laquelle couvre au moins en partie la surface extérieure (6) du corps à soufflet (5),
b. mise en place d'une natte d'étanchéité résinée (8) sur la section porteuse (7),
c. positionnement du corps à soufflet (5) dans l'espace intérieur du tube dans le secteur de la zone fuyante et/ou endommagée (2),
d. infiltration d'un fluide, en particulier d'un fluide gazeux, dans un espace intérieur du corps à soufflet, sachant que le corps à soufflet (5) se dilate à la suite de l'infiltration de fluide par accroissement de son volume,
e. fixation de la natte d'étanchéité résinée (8) à la paroi interne de tube (3) par :
i. compression de la natte d'étanchéité résinée (8) contre la zone fuyante et//ou endommagée (2) à la paroi interne (3) du tube (4) à la suite de la dilatation du volume du corps à soufflet (5), et
ii. durcissement de la natte d'étanchéité résinée (8),
f. enlèvement du corps à soufflet (5) du tube (4).

6. Utilisation d'un dispositif (1) constitué selon l'une quelconque des revendications 1 à 4, sous la forme de coussins d'étanchéité tubulaires ou sous la forme d'un coussin d'étanchéité tubulaire disposé dans une garniture de réparation déplaçable dans un tube (4).
